# EUROPÄISCHE PATENTSCHRIFT

(11) **EP 2 539 679 B1**
(45) Veröffentlichungstag und Bekanntmachung des Hinweises auf die Patenterteilung: **25.09.2019**
(21) Anmeldenummer: 11702049.5
(22) Anmeldetag: 03.02.2011
(51) Int. Cl.: G01M 13/04

(54) **SYSTEM BZW. VERFAHREN ZUR ERMITTLUNG EINES LAGERZUSTANDES**
SYSTEM AND METHOD FOR ASCERTAINING A BEARING STATE
SYSTÈME OU PROCÉDÉ DE DÉTERMINATION DE L'ÉTAT D'UN PALIER

(30) Priorität: 24.02.2010 DE 102010002294
(43) Veröffentlichungstag der Anmeldung: 02.01.2013
(60) Teilanmeldung: 19000377.2
(73) Patentinhaber: Siemens Aktiengesellschaft, 80333 München (DE)
(72) Erfinder: FRUH, Thomas, 90522 Oberasbach-Rehdorf (DE); HASSEL, Jörg, 91058 Erlangen (DE); PROBOL, Carsten, 91054 Buckenhof (DE); TISCHMACHER, Hans, 91207 Lauf (DE)
(86) Internationale Anmeldenummer: PCT/EP2011/051520
(87) Internationale Veröffentlichungsnummer: WO 2011/104091

(56) Entgegenhaltungen:
- EP-A1- 1 835 598
- EP-A2- 2 288 000
- WO-A1-02/089305
- WO-A1-2008/006655
- DE-A1-102004 056 996
- DE-A1-102005 004 862

## Beschreibung

Die Erfindung betrifft ein Verfahren und eine Vorrichtung/ System zur Simulation einer elektrischen Lagerbelastung eines Lagers einer elektrischen Maschine.

In den Lagern von elektrischen Maschinen, wie beispielsweise einem elektrischen Generator oder einem Elektromotor, kann es als Folge elektrostatischer Aufladung oder bei Speisung mittels eines leistungselektronischen Stellglieds zu einem unerwünschten Stromfluss kommen. Bei diesen Lagerströmen handelt es sich zum Teil um sogenannte EDM (Electric Discharge Machining)-Ströme, bei denen Lichtbogenentladungen in dem Lager auftreten. Es kommt insbesondere in dem Schmierfilm, der sich zwischen den Wälzkörpern und den Laufringen des jeweiligen Lagers befindet, zu Überschlägen und Entladungen. Dadurch kann sich ein vorzeitiger Verschleiß des Schmiermittels und des Lagers insgesamt einstellen. Ein vorzeitiger Lagerausfall ist ebenfalls eine mögliche Folge.

Aus der WO 02/089305 A1 ist eine Erkennung eines Lagerschadens bekannt, wobei hierzu eine Korrelation von Lagervibration und Statorstrom eines elektrischen Motors mit diesem Lager genutzt wird.

Aus der DE 10 2004 056 996 A1 ist eine Maschinenanordnung bekannt, bei welcher aus elektrischen Größen ein Schmierungszustand eines Wälzlagers ermittelt wird.

Aus der EP 1 835 598 A1 ist ein Verfahren zum Anzeigen eines Auftretens elektrischer Entladung in einem Schmiermittel zwischen einem Wälzkörper und einer Laufbahn in einem Lager eines elektrischen Antriebssystems bekannt. Dabei erfolgt ein entferntes Erfassen von Radiofrequenzsignalen, die von dem elektrischen Antriebssystem ausgesendet werden und ein Anzeigen des Auftretens einer elektrischen Entladung in dem Schmiermittel, wenn ein erfasstes Radiofrequenzsignal ein sich nicht wiederholendes Signal ist, das Frequenzspektra innerhalb eines Bereiches von 50 MHz bis 8 GHz und eine Dauer kürzer als 200 ns besitzt.

Aus der WO 2008/006655 ist ein Verfahren zur Ermittlung von Kurzschlüssen zwischen Statorblechen einer elektrischen Maschine bekannt, welche einen auf einer Welle rotierenden Rotor und einen Stator aufweist, der von einem zeitlich veränderlichen magnetischen Statorfluss durchsetzt wird, wobei im Betrieb der elektrischen Maschine eine Messgröße ermittelt wird, die auf einen durch den magnetischen Statorfluss hervorgerufenen Kurzschlussstrom zwischen mindestens zwei Statorblechen empfindlich ist. Der magnetische Statorfluss wird durch Messung und/oder Berechnung ermittelt, wobei die Messgröße oder eine daraus abgeleitete Hilfsgröße mit einem theoretischen Modell verglichen wird, das einen Zusammenhang zwischen dem magnetischen Statorfluss und der Messgröße oder der Hilfsgröße herstellt.

Aus der DE 10 2005 004 862 A1 ist ein Verfahren zur Überwachung der Temperatur zumindest eines Lagers einer elektrischen Maschine bekannt. Bei dem Verfahren wird ein Temperaturmodell vorgegeben, welches auf Basis eines Mehrmassenmodells die thermischen Verhältnisse in der elektrischen Maschine nachbildet. Es werden die Drehzahl und der Strom der elektrischen Maschine als Eingangsgrößen des Temperaturmodells fortlaufend erfasst und zumindest eine mit einem Lager korrespondierende Lagerverlustleistung und/oder Lagerinnenringtemperatur fortlaufend aus dem Temperaturmodell abgeleitet.

Eine Aufgabe der vorliegenden Erfindung ist es, ein Verfahren und eine Vorrichtung zur Simulation eines Lagerstromes bzw. einer elektrischen Lagerbelastung anzugeben.

Eine Lösung der Aufgabe ergibt sich beispielsweise gemäß eines Verfahrens bzw. Systems nach einem der Ansprüche 1 bis 10.

Lagerströme können bei elektrischen Maschinen immer wieder zu Problemen führen. Bei Netzmotoren treten Lagerströme auf, welche z.B. aus:
- Unsymmetrien im magnetischen Kreis,
- Fertigungstoleranzen, und/oder
- Materialanisotropien
resultieren. Sie treten nachteilig vor allem bei größeren Maschinen am sinusförmigen Netz in Erscheinung.

Eine asymmetrische Verteilung des magnetischen Flusses im Motor induziert eine Spannung in der Welle, die bewirkt, dass ein niederfrequenter Strom durch die Lager fließt. Diese Lagerströme zirkulieren in einem geschlossenen Kreis: Welle - Lager - Lagerschild- Gehäuse.

Abhilfe wird z.B. durch Unterbrechung des Stromflusses erreicht. Die Isolierung eines Lagers, zweckmäßigerweise an der Bedienseite kann zur Lösung des Problems führen.

Darüber hinaus treten auch Lagerströme auf die Aufgrund einer Umrichterspeisung entstehen. Basis sind dabei z.B. Stromrichter mit Spannungszwischenkreis. Bei umrichtergespeisten Motoren entstehen parasitäre Effekte, welche sich durch einen Stromfluss über das Motorlager äußern können. Lichtbogenentladungen über dem Schmierfilm des Lagers können zu Materialaufschmelzungen in den Lagerlaufbahnen führen. Diese Veränderungen können in extremen Fällen zu einem Totalausfall der Lagerung führen.

Zur Vermeidung eines schädlichen Lagerstromes können bei Drehstromantrieben mit leistungselektronischer Speisung Erdungsbürsten zwischen dem Läufer und dem Gehäuse verwendet werden. Dadurch erreicht man eine Erdung des Läufers. Allerdings unterliegen Erdungsbürsten einem Verschleiß, so dass der Wartungs- und Instandhaltungsaufwand steigt. Außerdem ist die Kontaktsicherheit der Erdungsbürsten gerade bei schwierigen Umgebungsbedingungen nicht immer gegeben, so dass es doch zur Ausbildung der Lagerströme und einem erhöhten Lagerverschleiß kommen kann. Zur Vermeidung eines Lagerstromes sind auch weitere unterschiedliche Abhilfemaßnahmen möglich, wie z.B. zur Vermeindung bzw. Minimierung eines Lagerschadens, Abhilfen in der Hardware (andere Kabel, bessere Erdung, Potenzialausgleich im System, Erdungsbürsten, Common-Mode-Filter).

Um die Lebensdauer eines Lagers zu verlängern, können auch andere Maßnahmen getroffen werden. Beispielsweise kann eine an der elektrischen Maschine anstehende elektrische Spannung gemessen werden, wobei aus dem Ergebnis der Spannungsmessung eine Gleichtaktspannung ermittelt wird, wobei anhand der Gleichtaktspannung eine Kompensationsspannung ermittelt wird und eine Komponente der elektrischen Maschine, die mit dem Lager elektrisch in Verbindung steht, mit der Kompensationsspannung beaufschlagt wird, so dass eine über dem Lager abfallende Lagerspannung zumindest teilweise kompensiert wird.

Die Lagerströme können so betriebspunkt- und anlagenspezifisch, also insbesondere zustandsorientiert, unterdrückt werden. Das Anlegen der insbesondere auf Basis einer Zustanderfassung ermittelten Kompensationsspannung an das Lager führt zu einer weitgehenden Kompensation der Lagerspannungen, die ansonsten bei zu großen Werten die Lichtbogenentladungen und damit die Lagerströme bewirken würden. Die verbleibenden Lagerrestspannungen sind zu niedrig, um noch Lichtbogenentladungen in schädigendem Ausmaß hervorzurufen. Im Idealfall verschwinden die gemessenen Lagerspannungen aufgrund der Kompensation sogar vollständig.

Es ist auch möglich die über dem Lager anstehende Lagerspannung oder den über das Lager fließenden Lagerstrom zu erfassen und bei der Ermittlung der Kompensationsspannung mit zu berücksichtigen. Dadurch lässt sich die Qualität der Kompensation weiter verbessern.

Im Gegensatz zu der Gleichtaktspannung, die eine indirekte Messgröße darstellt, handelt es sich bei dem Lagerstrom und der Lagerspannung um direkte Messgrößen, die eine unmittelbare Überwachung der Verhältnisse in dem jeweiligen Lager ermöglichen. Die Erfassung und insbesondere Rückkopplung dieser direkten Messgrößen gestatten eine sehr rasche Reaktion auf Zustandsänderungen in dem Lager.

Bei der Beurteilung und/oder der Kompensation von Lagerströmen ist es von Bedeutung, dass der Zustand des betreffenden Lagers bekannt ist. Durch Messung von Erdströmen, Wellenströmen und Wellenspannungen kann versucht werden eine elektrische Zustandsbeschreibung der Motorlager durchzuführen. Hiermit kann indirekt auf den Stromfluss im Lager zurückgerechnet werden.

Durch Verwendung äußerer Messwerte (z.B. Erdströme, Klemmenspannung, Wellenstrom, Wellenspannung (Lagerspannung), Lagertemperatur, Schwingung, Drehzahl, indirekte Lagerströme über Isolationsüberbrückung, Spannungssteilheit, Pulsfrequenz, usw.) lassen sich auf der Basis eines Simulationsmodells innere Messwerte (Größe des Lagerschmierspalts, Lagerkapazität, Lagerströme, usw.) berechnen. Weiterhin ist es möglich durch eine Kombination von inneren und äußeren Werten sogenannte Prozesskennwerte, wie z.B.:
- Häufigkeiten von Lagerstromspitzen;
- Häufigkeiten von Spannungsspitzen;
- Häufigkeiten von Spannungssteilheiten;
- Verhältnisbildung von einer aktuellen Häufigkeit zu der bei Anlageninbetriebnahme;
- Aufteilung in Häufigkeitsklassen und Berechung der Steigerung über einen Zeitraum deltaT;
- Berechnung der über den Lagerschmierspalt übertragenen Energie aus Produkt von gemessener Lagerspannung und errechnetem Lagerstrom durch Integration über die Zeit; und/oder
- einen Lagerzustand
zu errechnen. Ebenso ist eine Abschätzung der über einen Lagerschmierspalt übertragenen Energie bzw. Leistungsdichte möglich. Damit wird eine Abschätzung der Lagerlebensdauer ermöglicht.

Bei einem Verfahren zur Ermittlung eines Lagerzustandes eines Lagers einer elektrischen Maschine, wird mittels einer Sensoreinheit ein Messwert ermittelt. Die Sensoreinheit ist beispielsweise:
- ein Stromsensor;
- ein Spannungssensor;
- ein Hallsensor;
- die Summe sämtlicher Sensoren oder eine Vielzahl von Sensoren welche an und um die Lagerung des Motors angebracht sind (Temperaturfühler, Schwingungssensor, Bürste zur Messung der Lagerspannung, usw.);
- ein Spannungsmesser im Motorklemmenkasten;
- ein Stromwandler um die Erd- und Leistungsleitungen bzw. die Welle; und/oder
- dergleichen.

Der Messwert ist beispielsweise ein analoger Messwert oder ein digitaler Messwert eines Stromes oder einer Spannung.

Der Messwert oder auch eine Vielzahl von Messwerten wird an eine Simulationseinheit übermittelt. Die Simulationseinheit kann z.B. der Umrichter (bei errechneten Werten) sein, oder eine Sensor-Management-Unit (z.B. ein Condition Monitoring System SIPLUS CMS), ein an einem Motor befindlicher Prozessor, usw. sein. Mittels der Simulationseinheit kann ein Ergebniswert ermittelt werden. Der Ergebniswert ist beispielsweise ein Lagerstrom-Wert oder ein vom Lagerstrom abhängiger Wert. Der Ergebniswert kann an eine weitere Einheit übermittelt werden. Der Ergebniswert ist beispielsweise auch eine graphische Darstellung, eine Alarm-Meldung, eine Warn-Meldung und/oder eine ampelartige Darstellung der obig bereits benannten Werte wie Lagerschmierspaltgröße, Lagerkapazität, Lagerstrom, Häufigkeit von Lagerstromspitzen, Häufigkeit von Spannungsspitzen, usw.

Die weitere Einheit ist eine Auswerteeinheit, wobei mittels der Auswerteeinheit der Ergebniswert derart verarbeitet wird, dass ein Lagerzustandswert ermittelt wird. Die Auswerteeinheit kann beispielsweise eine Hardwareeinheit und/oder eine Softwareeinheit sein. Ebenso kann die Simulationseinheit eine Hardwareeinheit und/oder eine Softwareeinheit sein.

Die Simulationseinheit und die Auswerteeinheit können beispielsweise in der gleichen Hardwareeinheit realisiert sein, so dass die Simulation und die Auswertung beispielsweise auf der gleichen Prozessoreinheit ablaufen.

Es ist beispielsweise auch möglich, dass die Berechnung der Ergebniswerte und/oder Lagerzustandswerte auf einem integrierten Prozessrechner erfolgt. Der integrierte Prozessrechner weist hierfür ein Simulationsmodell auf, mittels dessen die Berechnung der Größen erfolgt. Der integrierte Prozessrechner ist beispielsweise eine Speicherprogrammierbare Steuerung (SPS), eine Computer Numerical Control (CNC), ein regelbarer Stromrichter oder dergleichen. Auch eine Kombination aus Sensor und Auswerte-/Simulationseinheit in einem Condition Monitoring System ist ausführbar.

Die Auswerteeinheit bzw. die Simulationseinheit weist beispielsweise eine Bildschirmanzeige auf, wobei auf der Bildschirmanzeige insbesondere ein Ergebniswert dargestellt wird. Möglich sind auch Ausgaben in Form einer Grafik oder eines Wertes mittels eines Druckers, einer akustischen und/oder visuellen Meldung, einer Ampel, oder dergleichen. Weiterhin kann auch ein Lagerzustandswert dargestellt werden. In einer Ausbildung der Bildschirmanzeige weist diese einen Zeiger (digital oder mechanisch) auf, mittels dessen ein Wert dargestellt werden kann. Überschreitet der angezeigte Wert einen Schwellwert, so kann in einer Ausgestaltung der Anzeige eine Warnung angezeigt werden.

In einer Ausgestaltung des Verfahrens werden die Messwerte in der Simulationseinheit und/oder in der Auswerteeinheit in Echtzeit verarbeitet. Dabei können Ergebniswerte und/oder Lagerzustandswerte einem Menschen, also einem Bediener, in Echtzeit dargestellt werden. Echtzeit bedeutet, dass die Verarbeitung bzw. Darstellung zeitnah erfolgt. Ein Zeitversatz aufgrund von z.B. Rechenzeiten oder Datenübertragungszeiten kann auftreten.

In einer Ausgestaltung des Verfahrens werden Ergebniswerte oder von Ergebniswerten abhängige Werte zusammen mit einem Zustandswert eines Stromrichters gespeichert. Zustandswerte des Stromrichters der die elektrische Maschine (den elektrischen Motor) speist, dessen Lager unter Beobachtung ist, sind z.B.:
- Zwischenkreisspannung,
- Maximalstrom,
- Maximalspannung,
- aktuelle Leistung,
- Pulsmuster,
- Pulsfrequenz,
- Zeitpunkt der Pulsmusterumschaltung,
- usw.

Zur Durchführung des Verfahrens können verschiedene Systeme zur Ermittlung eines Lagerzustandes eines Lagers einer elektrischen Maschine eingesetzt werden.

Ein derartiges System zur Ermittlung eines Lagerzustandes eines Lagers einer elektrischen Maschine, weist beispielsweise eine Simulationseinheit, eine Sensoreinheit und/oder eine Auswerteeinheit auf, wobei die Simulationseinheit zur Verarbeitung von Daten der Sensoreinheit vorgesehen ist und wobei die Auswerteeinheit zur Verarbeitung von Daten der Simulationseinheit vorgesehen ist.

Laut Erfindung, weist die Simulationseinheit ein Modell zur Simulation des Lagers auf.

In einer Ausgestaltung des Systems weist die Simulationseinheit ein Simulationsmodell zur Berechnung von Lagerschmierspalt, Lagerkapazität und/oder Lagerstrom aus den Maschinenparametern und den äußeren Messwerten auf. Maschinenparameter sind z.B. die geometrischen Abmessungen des Motors, Nuten, Isolationen, Längen, Nutzahlen usw. Aus diesen werden Streukapazitäten des Motors berechnet und das Simulationsmodell gebildet. Dabei kann ein kapazitives Ersatzschaltbild des Motors als Teil des Modells angewandt werden.

Eine genaue Zustandsbeschreibung des bzw. der Lager durch das Simulationsmodell kann auch eine Aussage über die Verschleißzustände der Motorlager und/oder des Lagerfettes liefern. Mit der Abschätzung einer Restlaufzeit kann ein Endnutzer seine Maintenance-Intervalle genauer planen und somit ungeplante Ausfälle verhindern.

Die Entladungszeitkonstante und Energie der Entladung hängen von der Schmierfilmdicke im Lager ab. Vorab kann beispielsweise eine Kennlinie darüber aufgenommen werden, welche Schmierfilmdicken zu welchen Zeitkonstanten und elektrischen Kapazitäten führt. Zusammen mit einem BVR (Bearing Voltage Ratio) und der Gleichtaktspannung des Umrichters kann hieraus auf die kraterwirksame Energie geschlossen werden. Es können auch von der Zeitkonstante und der Energie abgeleitete Parameter verwendet werden, z.B. Energie pro Volumeneinheit bei bestimmter Spannung.

Ein Verfahren zur Schmierfilmdickenbestimmung über eine Ladezeitkonstante kann auch an einem Lagerversuchsstand eingesetzt werden. An diesem Versuchsstand werden die Schmierfilmdicken als Funktion der Drehzahl, Lagerlast und Temperatur bestimmt. Das Ergebnis ist ein Kennfeld welches in das Simulationsmodell integriert wird. Auf der Basis der äußeren Messwerte kann nun auf die Schmierfilmdicke geschlossen werden. 3D-Kennlinien können so im Vorfeld an einem Versuchstand bestimmt werden. Es ist auch möglich das in Bezug auf den Versuchsstand beschriebene Vorgehen auf eine Online-Messung zu übertragen.

Bei dem dynamischen Vorgang der Lagerstromentstehung kann die Energie der Funkenentladung dann besonders schädlich sein, wenn die Entladung innerhalb einer kurzen Zeit stattfindet, so dass die Energie ausreicht, um Metall zu verdampfen oder sogar als Plasma wegspritzen zu lassen, bevor die Energie per Wärmeleitung mit Schallgeschwindigkeit abfließt. Typische Zeiten in der die kraterwirksame Energie freigesetzt wird bevor die Energie abgeflossen ist, liegen im Bereich 100 ps bis 1 ns.

Kennlinien können beispielsweise bezüglich der Zeitkonstanten analytisch berechnet oder numerisch simuliert werden und bezüglich der Entladezeiten in Abhängigkeit von der Schmierfilmdicke gemessen werden. Die Kennlinien bilden dann eine "Brücke" zwischen dem mechanischen Parameter "Schmierfilmdicke" und dem Materialabtrag durch Verdampfen, der zur Riffelbildung führt. Es kann also anhand der Kombination des elektrischen, thermodynamischen und des mechanischen Modells die Auswirkung von Schwingungen, die im Normalbetrieb oder durch Vorschädigung (Kerbe durch Transport oder Montage) hervorgerufen wird, abgeschätzt werden.

Werden nun Messwerte, die das Lager betreffen, als Eingangsgröße für ein Rechenmodell verwendet, so ist es damit möglich, auch von einem Anwender unerkannt, wirklich relevante Größen zu bestimmen.

Motor- und Systemdaten für die Modellbildung können durch ein einfaches Eingabesystem einem Messgerät (mit Sensor) zugeführt werden. Angeschlossen an eine Recheneinheit (dies ist z.B. die Simulationseinheit und/oder die Auswerteeinheit) ist eine entsprechende Messeinheit (insbesondere das Messgerät), welche relevante äußere Daten bestimmt (z.B. Leiter-Erd-Spannung, Wellenspannung, Lagergrößen im Betrieb). Eine Kombination mit dem Lagerstromsensor ist ebenso möglich.

Sensoreinheiten kann es mehr als eine geben. Zum Beispiel für jede Lagerung eine Einheit. Für die Messung der Klemmenspannungen und der Erdgrößen eine 3. Einheit usw. In einer Ausführungsform ist jeder Sensoreinheit eine Auswerteeinheit zugeführt. Jedoch ist auch die Verbindung zweier Auswerteeinheiten möglich. Beispielsweise kann eine Aussage darüber, ob es sich bei einem bestimmten Lagerstrom um Zirkularströme handelt, durch die Kombination von mindestens zwei Einheiten hergeleitet werden (Lager 1 Strom positive Spitze, Lager 2 Strom negative Spitze => Kreisstrom)

Aus den gewonnenen Daten der Simulationseinheit und/oder der Auswerteeinheit) können auch Ableitungen (Folgerungen) von RCM-Aussagen und Maßnahmen aus den Verschleißzuständen von Lager und Lagerfett getroffen werden. RCM steht hierbei für Reliability Centered Maintenance (Maßnahmen zuverlässigkeitsorientierter Instandhaltung). Darunter ist beispielsweise folgendes zu verstehen: ,
- eine Verkürzung von Schmierintervallen,
- eine Verkürzung von Fettwechsel Intervallen,
- eine Verkürzung von Lagerwechsel Intervallen,
- usw.

Das Simulationsmodell, welches beispielsweise auf einem Messgerät-Prozessrechner läuft, kann als Basis auf einem Motormodell aufsetzen, welches z.B. auf einer der gängigen Motor-Simulationsplattformen lauffähig ist. Mittels eines derartigen elektrischen Modells lässt sich das Hochfrequenzverhalten von Motoren beschreiben. Die HF-Modelle werden durch mechanische Lagermodelle ergänzt.

In der Projektierungsphase einer Anlage ist es möglich, durch Einbettung dieser Modelle in eine Anlagensimulation, welche die Eigenschaften von Einspeisung, Umrichter und Erdungssystem berücksichtigt, Aussagen über möglicherweise auftretende kritische Lagerbelastungen zu treffen. Mögliche Abhilfen können so schon in der Simulation getestet werden. Die Simulationswerte aus der Phase der Anlagenprojektierung können nun, eingebettet in entsprechende Prozessparameter, als Vergleichsgrößen für das identische bzw. nahezu identische Simulationsmodell des CM-Systems (Condition-Monitoring-System) dienen. Mögliche Unterschiede zwischen realen Betrieb und Simualtionswerten können so aufgedeckt und gezielt einer Analyse zugeführt werden. Mögliche Abhilfemaßnahmen sind auf diese Weise schneller und effizienter durchführbar.

Bislang wurden in realen Anlagen an vielen Stellen ziellos Veränderungen vorgenommen, in der Hoffnung auch die richtige Modifikation umzusetzen. Dies ist sehr teuer. Durch den vorherigen Einsatz der Simulation kann die Arbeit auf genau die Arbeit eingeschränkt werden, welche zur Problembeseitigung führt. In der Praxis ergeben sich hierdurch Zeit- und Kostenvorteile.

Durch Messungen werden Schwingungen, ggf. auch die Temperatur und weitere Messwerte wie den Schmierfettzustand ermittelt. Die Messwerte fließen in ein mechanisches Modell ein. Die Temperatur kann auch bekannt sein, wobei eine Messung der Temperatur vorzugsweise nahe am Lager erfolgt. Die Schmierfilmdicke hängt mit der Temperatur zusammen. Wenn keine Temperatur gemessen wird, ist diese abzuschätzen oder auch festzulegen. Eine Abschätzung kann z.B. aus der Motortemperatur (Wicklung) heraus erfolgen. Anhand des mechanischen Modells wird die Schmierfilmdicke ermittelt. Vorteilhafterweise wird dies im Frequenzbereich oder im Zeitbereich, d.h. dynamisch gemacht.

Bei einer einfachen Betrachtungsweise kann die Verwendung eines konstanten Schmierspaltes angenommen werden. Mit der Schmierfilmdicke und weiteren Daten wie der Lagerspannung oder indirekten Werten aus denen sich auf die Lagerspannung oder einen vergleichbaren Parameter schließen lässt, wird anhand von Kennlinien oder eines Modells die kraterwirksamen Energie oder ein vergleichbarer Parameter, der den zeitlichen Wärmeabfluss (thermodynamische Betrachtung) berücksichtigt, ermittelt.

Anhand der Daten zum Lager (z.B. geometrische Daten und Materialdaten) und eines Modells für einen Materialabtrag (z.B. Riffelvolumen, Sublimationsenergie, Verdampfungsenergie und/oder Schmelzenergie pro Volumeneinheit), kann eine erwartete Standzeit des Lagers ermittelt werden. Ein Vergleich mit den Anforderungen ergibt, ob Änderungen erforderlich sind. Diese können dann ggf. in einem neuen Durchlauf des Schemas bewertet werden. Je nach erforderlichen Änderungen kann ein kompletter Durchlauf erforderlich sein oder es ist nur ein Teildurchlauf notwendig.

Durch eine komplexere Modellbildung können auch verschiedene Elemente des Schemas zusammengefasst werden, z.B. durch ein Modell, was gleichzeitig die kraterwirksame Energie und den Materialabtrag umfasst. Es ist vorteilhaft, wenn mittels des Modells bzw. der Kennlinie Messungen mit den Simulationen und einer thermodynamischen Betrachtung, insbesondere der Wärmeableitung, kombiniert werden.

Bei einer Ausgestaltung des Verfahrens wird nach einer Ermittlung des Lagerzustandes eine mechanische Änderung des Lagers und/oder der elektrischen Maschine vorgenommen. Unter der Ermittlung des Lagerzustandes wird dabei beispielsweise folgendes verstanden:
- Ermittlung, Schätzung und/oder Berechnung eines Lagerstromes;
- Ermittlung, Schätzung und/oder Berechnung eines Verschleißes des Lagers;
- Ermittlung, Schätzung und/oder Berechnung einer Restlaufzeit des Lagers;
- usw.

Unter einer mechanischen Änderung des Lagers und/oder der elektrischen Maschine wird beispielsweise folgendes verstanden:
- eine Maßnahme zur Lagerisolation;
- eine Installation einer Erdungsbürste;
- eine Installation eines symmetrisch geschirmten Motoranschlusskabels;
- eine Installation einer Schirmkontaktierung über 360° Verbindungen;
- eine HF-Erdung einer oder mehrerer Komponenten wie z.B. der elektrischen Maschine, des Lagers und/oder des Umrichters;
- eine Vermaschung der Anlagenerdung;
- die Herstellung eines Potentialausgleichs im System; und/oder
- ein Einsatz eines Common-Mode-Filters.

Bei einer Ausführungsform des Verfahrens wird nach einer Ermittlung des Lagerzustandes eine mechanische Änderung des Lagers und/oder der elektrischen Maschine vorgenommen, wonach eine weitere Ermittlung des Lagerzustandes durchgeführt wird

Ein System kann derart ausgebildet sein, dass das Modell bzw. die Modelle auf einem integrierten Prozessrechner ablaufen. Der Prozessrechner könnte beispielsweise eine speicherprogrammierbare Steuerung oder auch ein Leitrechner sein.

Bei dem System zur Lagerbeobachtung kann die verwendetet Auswerteeinheit zur Ermittlung zumindest einer der folgenden Werte vorgesehen sein:
- einem Lagerstrom;
- über einen Lagerschmierspalt übertragene Energie;
- über einen Lagerschmierspalt übertragene Energiedichte;
- ein Wert für eine Lagerlebensdauer und/oder Restlaufzeit;
- einen Wert für einen Verschleißzustand des Lagers; bzw.
- einen Wert für einen Verschleißzustand des Lagerfetts.

In einer Ausgestaltung des Systems weist dieses einen Stromrichter auf, wobei der Stromrichter mit zumindest einer der folgenden Einheiten datentechnisch verbunden ist:
- mit der Simulationseinheit;
- mit der Sensoreinheit;
- mit der Auswerteeinheit; bzw.
- mit einer Kombination der Einheiten.

Durch diese datentechnische Verbindung können Daten wie Spannung, Strom, Pulsmuster, Energie, Wirkleistung, Blindleistung, Zwischenkreisspannung, Frequenz, an die jeweilige Einheit übermittelt werden, um diese Information dort zu verarbeiten.

Weitere mögliche Merkmale, Vorteile und Einzelheiten der Erfindung ergeben sich in beispielhafter Weise aus der nachfolgenden Beschreibung von Ausführungsvarianten anhand der Zeichnungen. Es zeigt z.B.:
- FIG 1: eine prinzipielle Darstellung eines Aufbaus einer dynamoelektrischen Maschine mit umgebenden Anlagenteilen;
- FIG 2: ein System zur Ermittlung eines Lagerzustandes eines Lagers einer elektrischen Maschine;
- FIG 3: ein Verfahren zur Ermittlung eines Lagerzustandes eines Lagers einer elektrischen Maschine; und
- FIG 4: ein Verfahren zur Überprüfung einer Standzeit eines Lagers.

Einander entsprechende Teile sind in den Figuren mit denselben Bezugszeichen versehen.

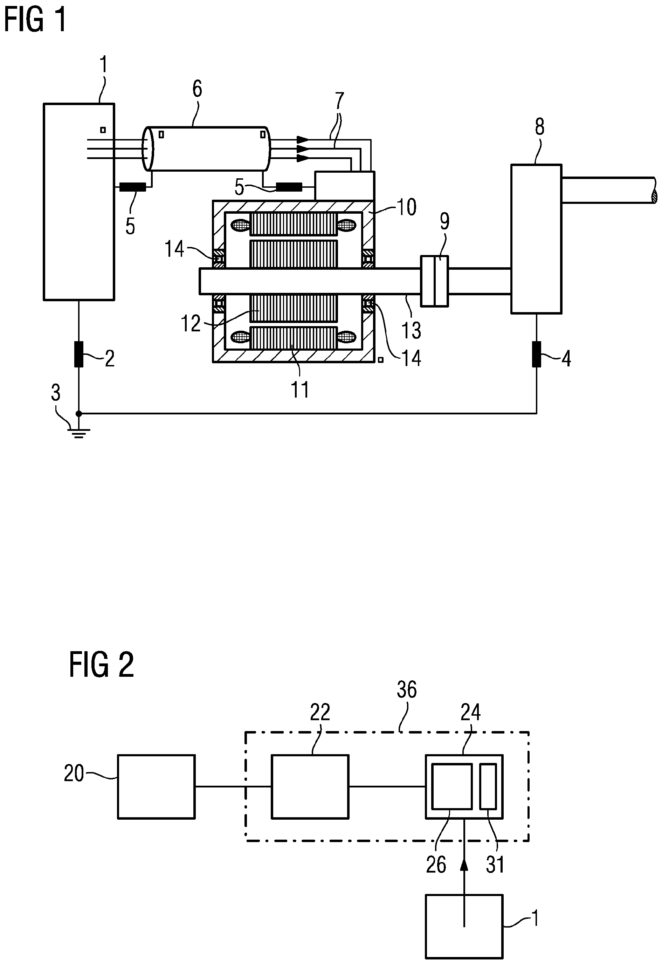

FIG 1 zeigt im Prinzip eine prinzipielle Darstellung eines Aufbaus einer dynamoelektrischen Maschine mit umgebenden Anlagenteilen. Im Einzelnen ist dabei ein Umrichter 1 über Anschlussleitungen 7 an eine dynamoelektrische Maschine angeschlossen, die sich innerhalb eines Motorgehäuses 10 befindet und einen Stator 11 und einen Rotor 12 aufweist, der über Lager 14 und eine Welle 13 über eine Kupplung 9 eine Lastmaschine 8 antreibt oder von ihr angetrieben wird.

Die elektrische Verbindung zwischen Umrichter 1 und dynamoelektrischer Maschine über die Anschlusskabel 7 weist ein Kabelschirm 6 auf, der eine entsprechende Anbindung 5 an die Erde von Umrichter bzw. Motorgehäuse erfährt. Sowohl Umrichter 1 als auch die Lastmaschine 8 sind über eine Erdung 2 bzw. 4 mit der Erde 3 verbunden. Auch der Motor kann mit Erde verbunden sein, allerdings ist dies in der Figur nicht dargestellt. Der Motor können z.B. zwei Erdungspunkte vorhanden sein. Ein Erdungspunkt liebt beispielsweise im Bereich eines Motorfußes. Ein weiterer Erdungspunkt liegt beispielsweise im Bereich eines Klemmkastens des Motors. Der Umrichter 1, insbesondere als Spannungszwischenkreisumrichter, zeigt seine Ausgangsspannung durch geregeltes Schalten des Gleichspannungszwischenkreises auf dem Ausgang. Ein Wechsel von positiven und negativen Potential in schneller Folge führt bei einem Zweipunktwechselrichter zu einem Spannungsverlauf, dessen Summe der Dreiphasenspannung ungleich Null ist und die sogenannte Common-Mode-Spannung ergibt. Jeder dieser steilen Spannungsschalthandlungen verursacht hochfrequente Anregungen mit daraus resultierenden Strömen, welche über parasitäre Pfade zur Quelle zurück fließen.

Die Darstellung gemäß FIG 2 zeigt ein System, welches aufweist:
- eine Sensoreinheit 20;
- eine Simulationseinheit 22;
- eine Auswerteeinheit 24; und
- einen Stromrichter 1.

Die Sensoreinheit 20 ist mit der Simulationseinheit 22 datentechnisch verbunden. Die Simulationseinheit 22 ist mit der Auswerteeinheit 24 datentechnisch verbunden. Der Stromrichter 1 ist mit der Auswerteeinheit 24 datentechnisch verbunden. Die Auswerteeinheit 24 weist eine Bildschirmanzeige 26 (Display) auf. Vom Stromrichter 1 können Zustandswerte 31 zur Auswerteeinheit 24 übertragen und dort gespeichert werden. Die Funktionen der Simulationseinheit 22 und der Auswerteeinheit 24 können mit Software und/oder Hardware realisiert sein.

In einer Ausgestaltung sind die Simulationseinheit 22 und die Auswerteeinheit in einem Prozessrechner 36 integriert. Der in FIG 2 gezeigte schematische Aufbau eines Systems zur Bewertung eines Lagers zeigt, dass eine Echtzeitbewertung eines Lagerzustandes erzielt werden kann.

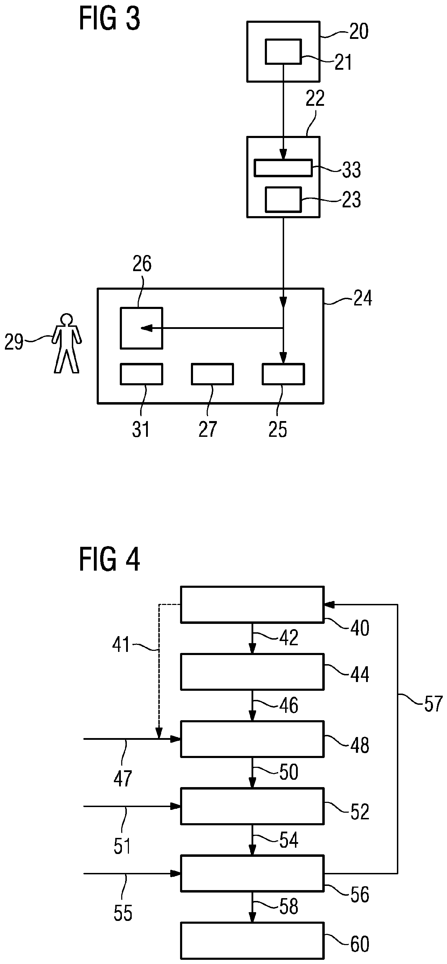

Die Darstellung gemäß FIG 3 zeigt ein Verfahren wie Lagerzustandsdaten ermittelt werden können. Mittels einer Sensoreinheit 20 wird ein Messwert 21 ermittelt. Der Messwert 21 wird an die Simulationseinheit 22 übertragen. Die Simulationseinheit 22 weist ein Modell 33 auf. Mittels des Modells 33, welches auch eine Kennlinie sein kann, und dem Messwert 21 wird ein Ergebniswert 23 ermittelt. Der Ergebniswert 23 wird an die Auswerteeinheit 24 übermittelt. Die Auswerteeinheit 24 weist eine Bildschirmanzeige 26 auf, welche von einer Person 29 ablesbar ist. Mit Hilfe von Ergebniswerten 25, 27 wird zumindest ein Zustandswert 31 des zu betrachtenden Lagers ermittelt.

Die Darstellung gemäß FIG 4 zeigt ein Verfahren zur Überprüfung einer Standzeit eines Lagers. Zunächst wird eine Messung 40 vorgenommen. Dies betrifft insbesondere Schwingungswerte und/oder Temperaturwerte. Über einen Datenpfad 42 werden die Werte in ein mechanisches Modell 44 übertragen. Mit Hilfe dieses mechanischen Modells 44 lässt sich z.B. eine Schmierfilmdicke, deren zeitlicher Verlauf und/oder ein entsprechender Amplitudenfrequenzgang, ermitteln. Diese Werte (z.B. Schmierfilmdicke) werden über einen Datenpfad 46 weiter übermittelt um diese in eine Kennlinie 48 bzw. in ein Modell 48 zur Ermittlung kraterwirksamer Energie einzuspeisen. Dieses Zwischenmodell 48 (Kennlinie bzw. Modell zur kraterwirksamen Energie) wird nicht nur durch Werte 46 aus dem mechanischen Modell 44 gespeist, sondern auf durch weitere Werte 47. Dies sind z.B.:
- Temperatur;
- BVR (Bearing Voltage Ratio);
- Zwischenkreisspannung eines Umrichters 1;
- Gleichtaktspannung;
- Lagerspannung;
- usw.

Darüber hinaus können über einen Datenpfad 41 Messwerte der Messung 40 im Modell 48 verarbeitet werden.

Über einen Datenpfad 50 gelangen Ergebniswerte wie z.B. eine kraterwirksame Energie, welche durch eine Kennlinie bzw. durch das Modell 48 ermittelbar ist, zu einem Modell für Materialabtrag 52. Daten zum Lager werden über einen Datenpfad 51 in das Modell für Materialabtrag 52 eingespielt. Hieraus ergibt sich ein Wert bezüglich einer prognostizierten Lagerlebensdauer. Dieser Wert über die prognostizierte Lagerlebensdauer wird über einen Datenpfad 54 an eine Einrichtung 56 zur Bewertung einer erwarteten Standzeit übermittelt. Diese Einrichtung 56 wird über einen Datenpfad 55 mit Daten bzgl. der Anforderungen an die Standzeit des Lagers beschickt.

Ist beispielsweise die Bewertung der erwarteten Standzeit zu niedrig, kann z.B. eine Design-Änderung veranlasst werden, wonach wieder eine Messung 40 veranlasst wird. Dies wird durch den Pfad 57 angedeutet. Für den Fall, dass die Bewertung der erwarteten Standzeit für in Ordnung anzusehen ist, kann diese Information über einen Datenpfad 58 beispielsweise graphisch über ein Display 60 ausgegeben werden.

## Patentansprüche

1. Verfahren zur Ermittlung eines Lagerzustandes eines Lagers einer elektrischen Maschine,
wobei mittels einer Sensoreinheit (20) ein Messwert (21) ermittelt wird,
wobei der Messwert an eine Simulationseinheit (22) übermittelt wird, wobei die Simulationseinheit (22) ein Modell zur Simulation des Lagers aufweist,
wobei mittels der Simulationseinheit (22) ein Ergebniswert (23) ermittelt wird, wobei der Ergebniswert insbesondere ein Lagerstrom-Wert oder ein vom Lagerstrom abhängiger Wert ist, wobei der Ergebniswert (23) an eine weitere Einheit (24) übermittelt wird, wobei die weitere Einheit (24) eine Auswerteeinheit (24) ist, wobei mittels der Auswerteeinheit (24) der Ergebniswert (23) derart verarbeitet wird, dass ein Lagerzustandswert (25) ermittelt wird, wobei mittels des Modells und dem Messwert der Ergebniswert ermittelt wird, wobei durch Verwendung äußerer Messwerte, insbesondere Erdströme, Klemmenspannung, Wellenstrom, Wellenspannung (Lagerspannung), Lagertemperatur, Schwingung, Drehzahl, indirekte Lagerströme über Isolationsüberbrückung, Spannungssteilheit, Pulsfrequenz, sich auf der Basis eines Simulationsmodells innere Messwerte, insbesondere Größe des Lagerschmierspalts, Lagerkapazität, Lagerströme, berechnen lassen.

2. Verfahren nach Anspruch 1, **dadurchgekennzeichnet,** dass die weitere Einheit eine Bildschirmanzeige (26) aufweist, wobei auf der Bildschirmanzeige der Ergebniswert (23) dargestellt wird.

3. Verfahren nach einem der Ansprüche 1 oder 2, **dadurc h gekennzeichnet**, dass die Messwerte (21) in der Simulationseinheit (22) und/oder in der Auswerteeinheit (24) in Echtzeit verarbeitet werden, wobei Ergebniswerte (25) und/oder Lagerzustandswerte (27) einem Menschen (29) in Echtzeit dargestellt werden kann.

4. Verfahren nach einem der Ansprüche 1 bis 3, **dadurch gekennzeichnet, dass** Ergebniswerte (25,27) oder von Ergebniswerten (27) abhängige Werte zusammen mit einem Zustandswert (31) eines Stromrichters (1) gespeichert werden.

5. Verfahren nach einem der Ansprüche 1 bis 4, **dadurch gekennzeichnet, dass** nach einer Ermittlung des Lagerzustandes eine mechanische Änderung des Lagers und/oder der elektrischen Maschine vorgenommen wird, wonach eine weitere Ermittlung des Lagerzustandes durchgeführt wird.

6. Verfahren nach einem der Ansprüche 1 bis 5, **dadurch gekennzeichnet, dass** zur Durchführung des Verfahrens ein System zur Ermittlung eines Lagerzustandes eines Lagers einer elektrischen Maschine (10,11,12,13) nach einem der Ansprüche 8 bis 12 verwendet wird.

7. System zur Ermittlung eines Lagerzustandes eines Lagers (14) einer elektrischen Maschine (10,11,12,13), aufweisend:
- eine Simulationseinheit (22),
- eine Sensoreinheit (20) und
- eine Auswerteeinheit (24),
wobei die Simulationseinheit (22) zur Verarbeitung von Daten (21) der Sensoreinheit (20) vorgesehen ist und wobei die Auswerteeinheit (24) zur Verarbeitung von Daten der Simulationseinheit (22) vorgesehen ist, wobei die Simulationseinheit (22) ein Modell zur Simulation des Lagers aufweist, wobei mittels der Auswerteeinheit (24) der Ergebniswert (23) derart verarbeitbar ist, dass ein Lagerzustandswert (25) ermittelbar ist, wobei mittels des Modells und einem Messwert ein Ergebniswert ermittelbar ist, wobei durch Verwendung äußerer Messwerte, insbesondere Erdströme, Klemmenspannung, Wellenstrom, Wellenspannung (Lagerspannung), Lagertemperatur, Schwingung, Drehzahl, indirekte Lagerströme über Isolationsüberbrückung, Spannungssteilheit, Pulsfrequenz auf der Basis eines Simulationsmodells innere Messwerte, insbesondere Größe des Lagerschmierspalts, Lagerkapazität, Lagerströme, berechenbar sind.

8. System nach Anspruch 7, **dadurch gekenn-zeichnet**, dass das Modell (33) auf einem integrierten Prozessrechner (36) abläuft.

9. System nach einem der Ansprüche 7 oder 8, **dadurch gekennzeichnet, dass** die Auswerteeinheit (22) zur Ermittlung zumindest einer der folgenden Werte vorgesehen ist:
- ein Lagerstrom,
- eine über einen Lagerschmierspalt übertragene Energie,
- eine über einen Lagerschmierspalt übertragene Energiedichte,
- ein Wert für eine Lagerlebensdauer und/oder Restlaufzeit,
- ein Wert für einen Verschleißzustand des Lagers
- ein Wert für einen Verschleißzustand des Lagerfetts.

10. System nach einem der Ansprüche 7 bis 9, **dadurch gekennzeichnet, dass** dieses einen Stromrichter (1) aufweist, wobei der Stromrichter (1) mit zumindest einer der folgenden Einheiten datentechnisch verbunden ist:
- mit der Simulationseinheit (22);
- mit der Sensoreinheit (20);
- mit der Auswerteeinheit (24) bzw.
- mit einer Kombination der Einheiten.

## Claims

1. Method for determining a bearing state for a bearing in an electric machine,
whereby a measured value (21) is determined by means of a sensor unit (20),
whereby the measured value is communicated to a simulation unit (22), whereby the simulation unit (22) has a model for simulating the bearing,
whereby a result value (23) is determined using the simulation unit (22), whereby the result value is in particular a bearing current value or a value which depends on the bearing current, where the result value (23) is communicated to a further unit (24), whereby the further unit (24) is an evaluation unit (24), whereby the result value (23) is processed using the evaluation unit (24) in such a way that a bearing state value (25) is determined, whereby the result value is determined by means of the model and the measured value, whereby by using external measured values, in particular earth currents, terminal voltage, shaft current, shaft voltage (bearing voltage), bearing temperature, vibration, rpm, indirect bearing currents by way of insulation bridging, voltage gradient, pulse frequency, inner measured values, in particular variables of the bearing lubrication gap, bearing capacitance, bearing currents can be calculated on the basis of a simulation model.

2. Method according to claim 1,
**characterised in that** the further unit has a screen display (26), whereby the result value (23) is displayed on the screen display.

3. Method according to one of claims 1 or 2,
**characterised in that** the measured values (21) are processed in the simulation unit (22) and/or in the evaluation unit (24) in real time, whereby result values (25) and/or bearing state values (27) can be displayed to a person (29) in real time.

4. Method according to one of claims 1 to 3,
**characterised in that** result values (25,27) or values which depend on result values (27) are stored together with a state value (31) for a converter (1).

5. Method according to one of claims 1 to 4,
**characterised in that** after a determination of the bearing state, a mechanical change is made to the bearing and/or to the electric machine, after which a further determination of the bearing state is made.

6. Method according to one of claims 1 to 5,
**characterised in that** for the purpose of carrying out the method use is made of a system according to one of the claims 8 to 12 for determining a bearing state of a bearing in an electric machine (10,11,12,13).

7. System for determining a bearing state for a bearing (14) in an electric machine (10,11,12,13), having:
- a simulation unit (22),
- a sensor unit (20) und
- an evaluation unit (24),
whereby the simulation unit (22) is provided for the purpose of processing data (21) from the sensor unit (20), and whereby the evaluation unit (24) is provided for the purpose of processing data from the simulation unit (22), whereby the simulation unit (22) has a model for simulating the bearing, whereby the result value (23) can be determined using the evaluation unit (22) such that a bearing state value (25) can be determined, whereby a result value can be determined by means of the model and a measured value, whereby by using external measured values, in particular earth currents, terminal voltage, shaft current, shaft voltage (bearing voltage), bearing temperature, vibration, rpm, indirect bearing currents by way of insulation bridging, voltage gradient, pulse frequency, inner measured values, in particular variables of the bearing lubrication gap, bearing capacitance, bearing currents can be calculated on the basis of a simulation model.

8. System according to claim 7
**characterised in that** the model (33) runs on an integrated process computer (36).

9. System according to one of claims 7 or 8
**characterised in that** the evaluation unit (22) is provided for the determination of at least one of the following values:
- a bearing current,
- the energy transferred through a bearing lubrication gap,
- the energy density transferred through a bearing lubrication gap,
- a value for the bearing service life and/or remaining service life,
- a value for the wear state of the bearing
- a value for the wear state of the bearing grease.

10. System according to one of claims 7 to 9
**characterised in that** it has a converter (1), where the converter (1) has a data link to at least one of the following units:
- with the simulation unit (22);
- with the sensor unit (20);
- with the evaluation unit (24) or
- with a combination of these units, as appropriate.

## Revendications

1. Procédé de détermination de l'état d'un palier d'une machine électrique,
dans lequel on détermine une valeur (21) de mesure au moyen d'une unité (20) formant capteur,
dans lequel on transmet la valeur de mesure à une unité (22) de simulation, l'unité (22) de simulation ayant un modèle de simulation du palier,
dans lequel on détermine une valeur (23) de résultat au moyen de l'unité (22) de simulation, la valeur de résultat étant notamment une valeur de courant du palier ou une valeur qui dépend du courant du palier, dans lequel on transmet la valeur (23) de résultat à une autre unité (24), l'autre unité (24) étant une unité (24) d'exploitation, dans lequel on traite la valeur (23) de résultat au moyen de l'unité (24) d'exploitation, de manière à déterminer une valeur (25) d'état du palier, dans lequel on détermine la valeur de résultat au moyen du modèle et de la valeur de mesure, dans lequel, en utilisant d'autres valeurs de mesure extérieures, notamment des courants de terre, la tension aux bornes, le courant ondulé, la tension ondulée (tension du palier), la température du palier, l'oscillation, la vitesse de rotation, les courant indirects de palier par shuntage par isolation, la pente de la tension, la fréquence des impulsions, on peut calculer, sur la base d'un modèle de simulation, des valeurs de mesure internes, notamment la dimension de la fente de lubrification du palier, la capacité du palier, les courants du palier.

2. Procédé suivant la revendication 1, **caractérisé en ce qu'**une autre unité a un affichage (26) à écran, la valeur (23) de résultat étant représentée sur l'affichage à écran.

3. Procédé suivant l'une des revendications 1 ou 2, **caractérisé en ce que** l'on traite, en temps réel, les valeurs (21) de mesure dans l'unité (22) de simulation et/ou dans l'unité (24) d'exploitation, les valeurs (25) de résultat et/ou les valeurs (27) d'état du palier pouvant être représentées en temps réel pour l'homme (29).

4. Procédé suivant l'une des revendications 1 à 3, **caractérisé en ce que** l'on met en mémoire des valeurs (25, 27) de résultat ou des valeurs, qui dépendent de valeurs (27) de résultat, ensemble avec une valeur (31) d'état d'un convertisseur (1).

5. Procédé suivant l'une des revendications 1 à 4, **caractérisé en ce que**, après avoir effectué une détermination de l'état du palier, on modifie mécaniquement le palier et/ou la machine électrique, en effectuant ensuite une autre détermination de l'état du palier.

6. Procédé suivant l'une des revendications 1 à 5, **caractérisé en ce que**, pour effectuer le procédé, on utilise un système de détermination d'un état d'un palier d'une machine (10, 11, 12, 13) électrique suivant l'une des revendications 8 à 12.

7. Système de détermination de l'état d'un palier (14) d'une machine (10, 11, 12, 13) électrique, comportant :
- une unité (22) de simulation,
une unité (20) formant capteur et
- une unité (24) d'exploitation,
l'unité (22) de simulation étant prévue pour traiter des données (21) de l'unité (20) formant capteur, et dans lequel l'unité (24) d'exploitation est prévue pour traiter des données de l'unité (22) de simulation, l'unité (22) de simulation ayant un modèle de simulation du palier, dans lequel, au moyen de l'unité (24) d'exploitation, la valeur (23) de résultat peut être traitée, de manière à pouvoir déterminer une valeur (25) d'état du palier, dans lequel, au moyen du modèle et d'une valeur de mesure, une valeur de résultat peut être déterminée, dans lequel, en utilisant des valeurs de mesure extérieures, notamment des courants de terre, la tension aux bornes, le courant ondulé, la tension ondulée (tension du palier), la température du palier, l'oscillation, la vitesse de rotation, les courant indirects de palier par shuntage par isolation, la pente de la tension, la fréquence des impulsions, des valeurs de mesure internes, notamment la dimension de la fente de lubrification du palier, la capacité du palier, des courants du palier, peuvent être calculées sur la base d'un modèle de simulation.

8. Système suivant la revendication 7, **caractérisé en ce que** le modèle (23) se déroule sur un ordinateur (36) de processus intégré.

9. Système suivant l'une des revendications 7 ou 8, **caractérisé en ce que** l'unité (22) d'exploitation est prévue pour déterminer au moins l'une des grandeurs suivantes :
- un courant du palier,
- une énergie transmise par une fente de lubrification du palier,
- une densité d'énergie transmise par une fente de lubrification du palier,
- une valeur d'une durée de vie du palier et/ou d'un temps de marche restant,
- une valeur d'un état d'usure du palier,
- une valeur d'un état d'usure de la graisse du palier.

10. Système suivant l'une des revendications 7 à 9, **caractérisé en ce que** celui-ci a un convertisseur (1), le convertisseur (1) étant relié en technique de données à au moins l'une des unités suivantes :
- à l'unité (22) de simulation ;
- à l'unité (20) formant capteur ;
- à l'unité (24) d'exploitation ou
- à une combinaison des unités.
